# EUROPEAN PATENT SPECIFICATION

(11) **EP 2 065 978 B1**
(45) Date of publication and mention of the grant of the patent: **19.08.2015**
(21) Application number: 07380335.5
(22) Date of filing: 30.11.2007
(51) Int. Cl.: H01R 4/36, H01R 11/11, H02G 15/007, H02G 15/192

(54) **A mechanical connector with incorporated cable centring means**
Mechanische Verbinder mit darin enthaltenen Kabelzentrierungsmitteln
Connecteur mécanique avec supports de centrage de câble incorporés

(43) Date of publication of application: 03.06.2009
(73) Proprietor: Ridelin, S.L., 08240 Manresa (Barcelona) (ES)
(72) Inventor: Capelles de la Fuente, Rosa, 08240 Manresa (Barcelona) (ES)
(74) Representative: Morgades y Manonelles, Juan Antonio

(56) References cited:
- EP-A- 1 788 684
- DE-A1- 19 960 198
- DE-U1-202006 000 833
- ES-A1- 2 281 291
- GB-A- 2 299 640

## Description

### OBJECT OF THE INVENTION

The present invention has as is object a mechanical connector with incorporated cable centring means.

### FIELD OF THE INVENTION

The present invention relates to electric connectors allowing to carry out splicings, branchings and terminations.

### BACKGROUND OF THE INVENTION

There exist in the market many types of screw-type mechanical connectors using very varied types of clamping screws for the clamping of the cable being introduced through one or both ends of the electric connector.

The existing mechanical connectors have a very similar general structure, some of them within the general make-up having some special features such as in the case of the Community Designs no. 209416, 457478, 501373 and others being owned by the applicant.

As for the clamping screws for the clamping of the cable to be connected, said screws being such as to be threadingly engaged into the bores of the connector, there also exist many types of them, and from among them those can be considered which are the object of the patents EP 1788684 and EP 1833117and others being owned by the applicant, several of them having necked-down portions determining the force of the clamping torque to be applied against the cable being received in the inside of the connector, in such a way that after the rupture of the clamping screw at the necked-down portion corresponding to the rupture torque the threaded portion is left in a threadingly engaged condition in the connector and clamps the cable in order to thus keep it in position, does not project from the corresponding bore and is left in an innerly nested arrangement as related to the outer surface of the connector.

There are another documents related to mechanical connectors ., such DE 199 60 198 A1 of Pfisterer Kontaktsyst Gmbh that describes a connector having screws , to connects two cables or metallic conductors , fixing them by means of screws provided with circular cuts that they breaking when the operator apply a breaking torque , entering both opposite cables into the connector body , having a cylindrical hollow shape , through a respective conventional and usual sleeve for centring the cable , which sleeve is coupled to the corresponding end of the connector .The object of the patent Application of Pfisterer is the means to the fixation an object such an electrical conductor to a seat , such a connector , by pressing screws that fixing the cable withing the connector. The cable or metallic conductor entering into the connector through a sleeve coupled to the respective end of the connector. This screws have respective seat for tools in the central and longitudinal portion.

The documents EP 1 788 684 A1 and ES 2 281 291 A1 mentioned above which owner is the Applicant have been described before. Also , there are the documents DE 20 2006 000 833 U1 of Caliebe ,Reinhard and Petri , Manfred , which presents a complicated arrangement, and GB 2 299 640 A of B & H Limited , that describes an enhanced fastener to electrical connectors.

When generally fitting the cable to the conventional mechanical connectors the clamping screws press the cable against the inner surface of the connector, and this determines that at the emergence of the cable as it emerges from the connector there is a distance between the geometric axes of the connector and the cable, these latter being parallel but not coincident.

In order to obviate this drawback there exist the cable centring means that are fitted to one or both ends of the connector and have the function of "centring" the cable at the emergence of the cable as it emerges from the connector so as to thus in as far as possible have the two geometric axes of the connector and the cable arranged in a substantially coincident arrangement.

The cable centring means existing in the market besides have another drawback relating to the fact that each centring means is such as to be used for only one cable diameter, such a state of things forcibly requiring a cost-intensive stock in order to thus have multiple centring means available for cables of multiple diameters.

The cable centring means forming part of the mechanical connector with incorporated cable centring means being the object of the invention now obviates the aforementioned drawbacks of the known centring means because on the one hand in the inside of the connector and due to the pressure being exerted by the clamping screws the two geometric axes of the connector and the cable are parallel and at a distance from each other, but the centring means of the connector of the invention is such as to forcibly bring about a slight bending of the cable in the inside of the connector before the cable has emerged from the connector, said slight bending being due to said centring means, and as from the centring means the cable again experiences a slight bending but in the opposite direction, whereupon the two geometric axes of the connector and the cable are substantially coincident in the axial direction.

### SUMMARY OF THE INVENTION

The mechanical connector with incorporated cable centring means being the object of the present invention corresponds to the electric connector according to claim 1.

According to the invention the centring means being provided as a by way of cover consists in the mouthpiece, and the mouthpiece and the corresponding end of the connector are provided with complementary means allowing to have them fitted to each other.

The centring means being provided as a by way of cover as well consists in the mouthpiece tubularly extending as a by way of skirt towards the middle portion of the connector, said skirt being provided with apertures being in correspondence with the bores of the connector for the passage of the clamping screws, the end of the skirt and the corresponding middle portion of the connector being besides provided with complementary means allowing to have them fitted to each other.

After having tightened the clamping screws and thus made them to break to thus keep the cable in position in the connector said skirt being provided with apertures for the passage of the clamping screws through the bores of the connector can be made to rotate with respect to the connector in such a way that the unapertured portions of the skirt cover the bores of the connector.

The connector for splicings and/or branchings comprises two centring means, and those of these latter being of the type consisting of a mouthpiece only occupy the ends of the connector, and those being of the type consisting of a mouthpiece with skirt cover the ends and the whole body of the connector, the edges of the skirts thus coming to be arranged in a substantially mutually abutting arrangement at the middle portion of the connector.

The flexible means of the mouthpiece of the centring means in their turn comprise a number of circumferentially separate lips conically and innerly extending towards the connector.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:
Fig. 1 is a perspective view of the connector with two centring means incorporated to it, one at each end, said centring means being of the type consisting of a mouthpiece with skirt.
Fig. 2 is a longitudinally sectional view of the connector of Fig. 1, wherein one of the centring means, these latter both being of the type consisting of a mouthpiece with skirt, is shown as positioned as per an exploded arrangement outside the connector.
Fig. 3 is a longitudinally sectional view being similar to Fig. 2 and showing the two centring means being provided as a by way of cover, each of them comprising the mouthpiece with skirt, as seen when being positioned on the connector at both ends, the edges of the skirts having come to be arranged in a mutually abutting arrangement.
Fig. 4 is a longitudinally sectional view being similar to Fig. 3 and showing a cable having been introduced through one of the centring means of the connector up to the intermediary partition wall, said cable being pressed by the corresponding clamping screws, these latter during their tightening having been made to break at the necked-down portion corresponding to the set torque.
Fig. 5 is an end elevational view of the connector.
Fig. 6 is a plan-view of Fig. 1.

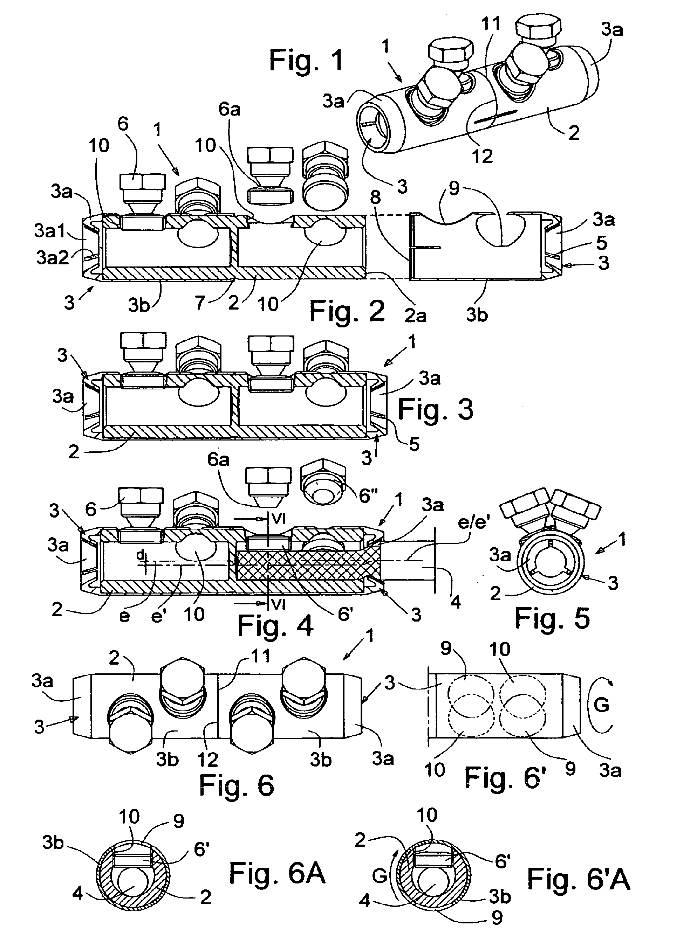

Fig. 6' is a fragmentary plan-view corresponding to Fig. 6 but with the centring means having been rotated in such a way that the bores with the treaded portion having been broken off and pressing the cable of the connector are concealed by the skirt of the centring means.
Fig. 6A corresponds to a cross-section along section line VI-VI in Fig. 4. Fig. 6'A is a cross-sectional view similar to Fig. 6A but with the centring means having been rotated through 180°.

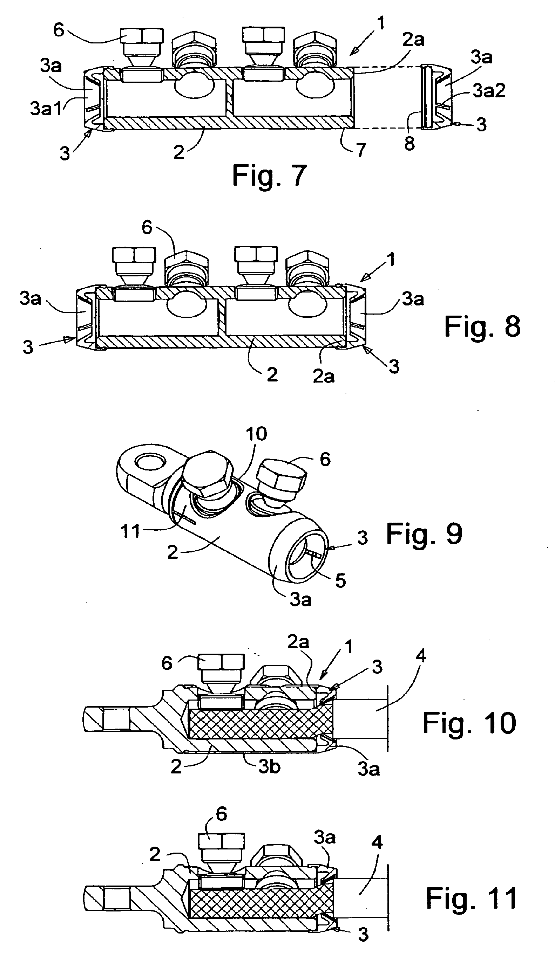

Fig. 7 is a longitudinally sectional view being similar to Fig. 2, wherein the two centring means are of the type consisting of a mouthpiece only, one of the centring means being shown in an exploded position outside the connector.
Fig. 8 is a sectional view being similar to Fig. 7 but with the two centring means having been each of them fitted to a respective end of the connector.
Fig. 9 is a perspective view of a terminal connector of the type having a mouthpiece with skirt, said connector at its cable engaging end being provided with the corresponding centring means.
Fig. 10 is a longitudinally sectional view of the connector of Fig. 9 with the centring means of the type consisting of a mouthpiece with skirt, with the cable end having been received in its inside.
Fig. 11 is a longitudinally sectional view of a connector with the centring means of the type consisting of a mouthpiece only, with the cable end having been received in its inside.

### DETAILED DESCRIPTION OF A PREFERRED EMBODIMENT

According to the drawings the mechanical connector with incorporated cable centring means being the object of the present invention and generally designated at -1- relates to the metallic body making up the screw-type mechanical connector -2- incorporating a centring means - 3- for centring the cable -4-, said centring means having a configuration as a by way of cover and being adapted to be fitted to each of the ends of the connector -2-.

According to the invention the centring means -3- being provided as a by way of cover comprises at least one mouthpiece -3a- being adapted to be fitted to each end -2a- of the connector -2-. The mouthpiece is provided with flexible means -5- allowing it to adapt to cables - 4- of different diameters, the cable -4- when being introduced into the connector -2- hence passing though the flexible means -5- of the mouthpiece -3a- of the centring means -3- being fitted to the connector -2-, said cable thus being received in the inside of said connector and kept in position by means of the respective clamping screws -6-, these latter being tightened up to the value of the preset torque bringing about the breakage of the clamping screw -6- at the corresponding necked-down portion -6a- as shown in Fig. 4.

The flexible means -5- of the mouthpiece -3a- of the centring means -3- consist in a number of circumferentially separate lips -3a1- conically and innerly extending towards the connector -2-, said lips - 3a1- being defined by slits -3a2-.

According to the present invention the centring means -3- being provided as a by way of cover in a first preferred embodiment consists in the mouthpiece -3a-only, as shown in Figs. 7, 8 and 11, said mouthpiece -3a- and the corresponding end -2a- of the connector -2- being provided with complementary means allowing to have them fitted to each other, these latter means consisting in a groove -7- and a rim -8- being both annular and provided at one or another of the members of the group consisting of the aforementioned mouthpiece and the aforementioned end of the connector.

According to the invention the centring means -3- being provided as a by way of cover in a second preferred embodiment consists in the mouthpiece -3a- tubularly extending as a by way of skirt -3b- towards the middle portion of the connector -2- as shown in Figs. 1, 2, 3, 4, 5, 6, 6', 6A, 6'A, 9 and 10, said skirt -3b- being provided with apertures -9- in correspondence with the bores -10- of the connector -2- for the passage of the clamping screws -6-, in the same manner as in the case of the mouthpiece -3a- the end of the skirt -3b- and the corresponding middle portion of the connector -2- being provided with complementary means allowing to have them fitted to each other, these latter means consisting in a groove -7- and a rim -8- being both annular and provided at one or another of the members of the group consisting of the aforementioned end of the skirt and the aforementioned middle portion of the connector.

As has been described and illustrated, the connector -2- for splicings, branchings, terminations, etc. comprises two centring means -3-, and those of these latter being of the type consisting of a mouthpiece -3a-only occupy the ends of the connector -2-, and those being of the type consisting of a mouthpiece -3a- with skirt -3b- cover the ends and the corresponding half of the body of the connector -2-, the edges -11-, -12- of the skirts -3b-, -3b- thus coming to be arranged in a substantially mutually abutting arrangement (see Figs. 1, 3, 4 and 6).

The present invention provides for the bores -10- of the connector -2- into which the clamping screws -6- are to be threadingly engaged to be possibly arranged in an aligned arrangement as per the usual practice, or in a staggered arrangement as shown in Figs. 1, 2, 3, 4, 5, 6, 7, 8, 9, 10 and 11.

The connector -2- being provided with the cable centring means -3- being provided as a by way of cover as per the object of the present invention has a notable advantage with the embodiment wherein the centring means -3- comprises the mouthpiece -3a- and the skirt -3b- as shown in the figures, wherein the apertures -9- being provided in the skirt -3b- allow the passage of the clamping screws -6-.

After having proceeded to tighten the clamping screws -6- as per the preset torque and having thus made them to break at the corresponding necked-down portion - 6a-, a portion -6'- of the screw thus remains in the connector -2- and thereby keeps the cable -4- in position in the inside of the connector and the other portion - 6''- is removed from the connector as shown in Fig. 4.

A major feature of the centring means -3- being provided for centring the cable -4- and belonging to the mechanical connector with incorporated cable centring means being generally designated at -1- and being the object of the invention consists in that in the inside of the connector (see Fig. 4) the two geometric axes -e- and -e'- respectively of the connector -2- and the cable -4- are parallel and separated at a distance -d-. Thanks to the centring means -3- of the connector -2- of the invention the cable -4- in the inside of the connector - 2- and as from the clamping screw -6- being adjacent to the centring means -3- and up to the centring means is forced to experience a slight bending by the centring means -3-, and at the emergence site as it emerges from the connector and as from the centring means said cable then experiences a slight bending in the opposite direction, whereby the two geometric axes -e- and -e'- of the connector -2- and the cable -4- are then arranged in a substantially coincident arrangement.

Another feature of the centring means -3- being provided for centring the cable -4- and belonging to the mechanical connector of the invention lies in the fact that it can be used for cables of different diameters and hence does not have a limited usability like that of the centring means having existed so far, wherein for each cable diameter only one centring means is usable in correspondence with said diameter for the introduction of the cable.

The connector -2- of the invention is as well such as to allow that by making the centring means -3- comprising the mouthpiece -3a- and the skirt -3b- to rotate as per a rotational motion -G- the skirt is made to rotate and thus cover the bores -10- of the connector with the portions -6'- positioning the cable -4- in the connector -2-, this being illustrated in Figs. 4, 6 and 6', and on the other hand in Figs. 6A and 6'A, each of these latter being a cross-section along section line VI-VI in Figs. 6 and 6', respectively, as per Fig. 4. Fig. 6A illustrates the position of the centring means -3- with its apertures -9- of the skirt -3b- coinciding with the bores -10- of the connector -2- as shown in Fig. 6, and Fig. 6'A illustrates the aforementioned centring means with the aforementioned apertures -9- not coinciding with the bores -10-, these latter in this case being covered by said skirt -3b-, as shown in Fig. 6' wherein a better protection is achieved for the connector -2-.

It is to be pointed out that the clamping screws -6- having been illustrated here correspond to one example of this type of screws being only shown for illustrative purposes, and that said screws can hence be of any convenient type.

According to the invention the clamping screws being especially suitable for being used with the present mechanical connector with incorporated cable centring means are those being the object of the aforementioned patents being owned by the applicant and showing the best features for this type of clamping screws since they have necked-down portions for their breakage in correspondence with one or several torques to be applied, and stop members being provided for setting the final limit to the screwing in operation and defined by annular rims or disc-shaped elements.

The objective of the present invention is that of providing a mechanical or so-called screw-type connector originally incorporating the cable centring means having been described and illustrated in the successive figures.

## Claims

1. A mechanical connector (2) with incorporated cable centring means, of the type wherein the mechanical connector corresponds to the screw-type connector for splicings, branchings and terminations being employed in electrical connectors (2), said mechanical connector (2) being provided with a number of bores (10) into which the clamping screws (6) are to be threadingly engaged for the clamping of the cable (4) being received in its inside, wherein the mechanical connector (2) incorporates a centring means (3) for the cable (4) **characterised in that** said centring means (3) consists in a mouthpiece (3a) tubularly extending as a skirt (3b) towards the middle portion of the connector (2), said skirt (3b) being provided with apertures (9) being in correspondence with the bores (10) of the connector (2) for the passage of the clamping screws (6), and **in that** the end of the skirt (3b) and the corresponding middle portion of the connector (2) are provided with complementary means (7, 8) allowing to have them fitted to each other, and wherein by making the centring means (3) to rotate is made to conceal the bores (10) with broken off portions (6') of the clamping screws (6) pressing the cable (4) being positioned in the connector (2).

2. A mechanical connector with incorporated cable centring means, according to claim 1, **characterized in that** the centring means (3) consisting of a mouthpiece (3a) with skirt (3b) covers the ends (2a) and part of the body of the connector (2), the edges (11, 12) of the skirts (3a,3b) of two centring means (3,3) coming to be arranged in a substantially mutually abutment arrangement.

## Patentansprüche

1. Mechanischer Verbinder (2) mit einem integrierten Mittel zur Kabelzentrierung, wobei der mechanische Verbinder seiner Art nach ein Schraubverbinder für Spleißungen, Verzweigungen und Endanschlüsse ist, der in elektrischen Verbindern (2) verwendet wird, wobei dieser mechanische Verbinder (2) mit einer Reihe von Bohrungen (10) versehen ist, in welche die Klemmschrauben (6) zum Klemmen des Kabels (4), das im Inneren aufgenommen wird, in Eingriff gebracht werden, und wobei der mechanische Verbinder (2) ein Zentriermittel (3) für das Kabel (4) umfasst, **dadurch gekennzeichnet, dass** das Zentriermittel (3) aus einem Mundstück (3a) besteht, das sich röhrenförmig als Einfassung (3b) zum Mittelteil des Verbinders (2) hin erstreckt, wobei diese Einfassung (3b) mit Öffnungen (9) versehen ist, die mit den Bohrungen (10) im Verbinder (2) für die Einführung der Klemmschrauben (6) übereinstimmen, und dadurch, dass das Ende der Einfassung (3b) und der entsprechende Mittelteil des Verbinders (2) mit ergänzenden Mitteln (7, 8) versehen sind, die eine Befestigung untereinander ermöglichen, und wobei durch Drehen des Zentriermittels (3) die Bohrungen (10) mit Hilfe von Durchbrechungen (6') an den Klemmschrauben, die das im Inneren des Verbinders (2) liegende Kabel (4) gedrückt halten, verdeckt werden können.

2. Mechanischer Verbinder mit einem integrierten Mittel zur Kabelzentrierung nach Anspruch 1, **dadurch gekennzeichnet, dass** das aus einem Mundstück (3a) mit einer Einfassung (3b) bestehende Zentriermittel (3) die Enden (2a) und einen Teil des Körpers des Verbinders (2) abdeckt, wobei die Ränder (11, 12) der Einfassungen (3a, 3b) von zwei Zentriermitteln (3, 3) in einer im Wesentlichen aneinander anstoßenden Anordnung zu liegen kommen.

## Revendications

1. Un connecteur mécanique (2) avec un moyen de centrage de câble incorporé, du genre dans lequel le connecteur mécanique correspond au connecteur de type à vis pour des raccords, branchements et terminaisons, qui est utilisé dans des connecteurs électriques (2), ledit connecteur mécanique (2) étant muni d'un certain nombre de perforations (10) dans lesquelles les vis de serrage (6) sont insérées par filetage pour le serrage du câble (4) qui est reçu en son intérieur, dans lequel le connecteur mécanique (2) comporte un moyen de centrage (3) pour le câble (4), **caractérisé en ce que** ledit moyen de centrage (3) consiste dans une embouchure (3a) se prolongeant de manière tubulaire comme une jupe (3b) vers la partie médiane du connecteur (2), ladite jupe (3b) étant munie d'ouvertures (9) qui sont en correspondance avec les perforations (10) du connecteur (2) pour le passage des vis de serrage (6), et **en ce que** l'extrémité de la jupe (3b) et la partie médiane correspondante du connecteur (2) sont pourvues de moyens complémentaires (7, 8) leur permettant d'être aptes l'une à l'autre, et où faire tourner le moyen de centrage (3) permet de dissimuler les perforations (10) avec des parties rompues (6 ') des vis de serrage (6) qui pressent le câble (4) et qui sont placées dans le connecteur (2).

2. Un connecteur mécanique avec un moyen de centrage de câble incorporé, selon la revendication 1, **caractérisé en ce que** le moyen de centrage (3) consistant dans une embouchure (3a) avec une jupe (3b) recouvre les extrémités (2a) et une partie du corps du connecteur (2), les extrémités (11, 12) des jupes (3a, 3b) de deux moyens de centrage (3, 3) étant disposées mutuellement dans un agencement sensiblement en butée.
